# EUROPÄISCHE PATENTSCHRIFT

(11) **EP 2 067 117 B1**
(45) Veröffentlichungstag und Bekanntmachung des Hinweises auf die Patenterteilung: **04.09.2013**
(21) Anmeldenummer: 07818106.2
(22) Anmeldetag: 11.09.2007
(51) Int. Cl.: B62B 5/00

(54) **EINKAUFSWAGEN**
SHOPPING TROLLEY
CHARIOT DE SUPERMARCHÉ

(30) Priorität: 12.09.2006 DE 102006043523
(43) Veröffentlichungstag der Anmeldung: 10.06.2009
(73) Patentinhaber: Wanzl Metallwarenfabrik GmbH, 89336 Leipheim (DE)
(72) Erfinder: ECKERT, Rainer, 73230 Kirchheim/Teck (DE); HÄMMERLE, Jürgen, 89312 Günzburg (DE); NÄGELE, Günther, 89264 Weissenhorn (DE); RUDOLPH, Michael, 31157 Sarstedt (DE)
(86) Internationale Anmeldenummer: PCT/EP2007/007909
(87) Internationale Veröffentlichungsnummer: WO 2008/031563

(56) Entgegenhaltungen:
- EP-A- 0 944 015
- EP-A- 1 583 050
- WO-A-96/04161
- DE-A1- 10 134 410
- DE-U1-202005 020 427
- KR-A- 20050 009 097
- US-A- 5 777 561

## Beschreibung

Die Erfindung betrifft ein Verfahren zur Herstellung eines stapelbaren Einkaufswagens mit den Merkmalen im Oberbegriff des Hauptanspruchs, wie es dem Fachmann bereits bekannt ist.

Einkaufswagen dieser Gattung werden zum Transportieren von Ware oder anderen Gegenständen eingesetzt. Sie finden insbesondere Einsatz in Supermärkten.

Zum Stand der Technik zählt beispielsweise ein Einkaufswagen wie er in der französischen Patentanmeldung FR 2 799 713 beschrieben ist. Dieser Einkaufswagen weist einen Korb mit einem Schiebegriff sowie eine Klappe zum Ineinanderstapeln baugleicher Wagen auf. Ein Gestell trägt den Korb und ist mit Rollen versehen. Der Wagen ist aus Kunststoff gefertigt. Weitere Kunststoffwagen sind in den Schriften WO 96/04161, EP 0 672 568 B1 und EP 0 863 829 B1 beschrieben. Solche Wagen weisen einen Korb aus Kunststoff auf. Auch das Gestell ist überwiegend aus Kunststoff gefertigt. Hergestellt werden solche Wagen aus einem Teil oder mehreren Teilen mittels eines Spritzgussverfahrens.

Aus der europäischen Patentschrift EP 0 863 829 B1 ist darüber hinaus ein Wagen beschrieben, der aus einem doppelwandigen Kunststoff-Material gefertigt ist.

Auch gibt es Wagen, die im Inneren des Korbes eine Trennwand aufweisen. Ein solcher Einkaufswagen ist beispielsweise aus der internationalen Patentanmeldung WO 2005/085035 bekannt.

Zur Materialeinsparung ist die Wandung vorzugsweise nicht vollflächig ausgebildet, sondern mit Ausnehmungen versehen.

Die Rollen werden am Gestell des Wagens montiert. Es erweist sich als sinnvoll, einzelne Bereiche wie beispielsweise Teile des Gestells und oder des Korbes mit einer Verstärkung zu versehen.

Des Weiteren beschreibt die europäische Patentanmeldung EP 1 583 050 einen Einkaufswagen, der mit einer Antenne ausgestattet ist, die für das Lesen von RFID-Tags eingesetzt wird. Es wird das Volumen des Wagens und hierbei insbesondere die Waren, die jeweils mit einem RFID-Tag versehen sind und/oder die angrenzende Umgebung detektiert. Ein solcher Einkaufswagen ist darüber hinaus mit einer Anzeigevorrichtung ausgestattet, die die Informationen des RFID-Tags jeder Ware im Inneren des Wagens ausgewertet angezeigt und zur Weiterverarbeitung und/oder weiteren Auswertung an einen Zentralrechner weitergibt. Die Antenne ist an den Ecken des Wagens oder am oberen Rand des Korbes vorgesehen.

Schwierigkeiten treten jedoch dann auf, wenn ein Wagen z.B. innerhalb eines Supermarktes zu nah an mit RFID-Tags versehene Waren heran gefahren wird. Es kommt dann vor, dass die Antenne Waren erfasst, die sich noch im Regal befinden.

Weiterhin stimmen die im Inneren des Wagens erfassten Waren unter Umständen nicht mit der Anzahl der im Korb befindlichen Waren überein.

Die Aufgabe der Erfindung besteht daher darin, ein besseres Verfahren zur Herstellung eines stapelbaren Einkaufswagen zur Erfassung von mit RFID-Tags versehenen Waren zu beschreiben.

Die Aufgabe wird erfindungsgemäß mit den kennzeichnenden Merkmalen des Hauptanspruchs gelöst.

Ein großer Vorteil besteht auch darin, dass eine Aufteilung der Antennen in Sendeantennen und Empfangsantennen vorgenommen wird, wodurch die Genauigkeit der Erfassung erhöht wird.

Durch die Anordnung der Antennen, die von den verschiedenen Teilen des Korbes vollständig oder teilweise umschlossen sind, stören die Antennen nicht am Wagen. Auch können sie dadurch während des Gebrauchs nicht beschädigt werden.

Weiterhin fallen durch die Anordnung der Antennen während des Fertigungsprozesses nur unerhebliche Mehrkosten an.

Die Erfindung wird anhand eines Ausführungsbeispiels näher erläutert. Es zeigt
- Fig. 1: einen Einkaufswagen in Seitenansicht,
- Fig. 2: denselben Einkaufswagen in Draufsicht.

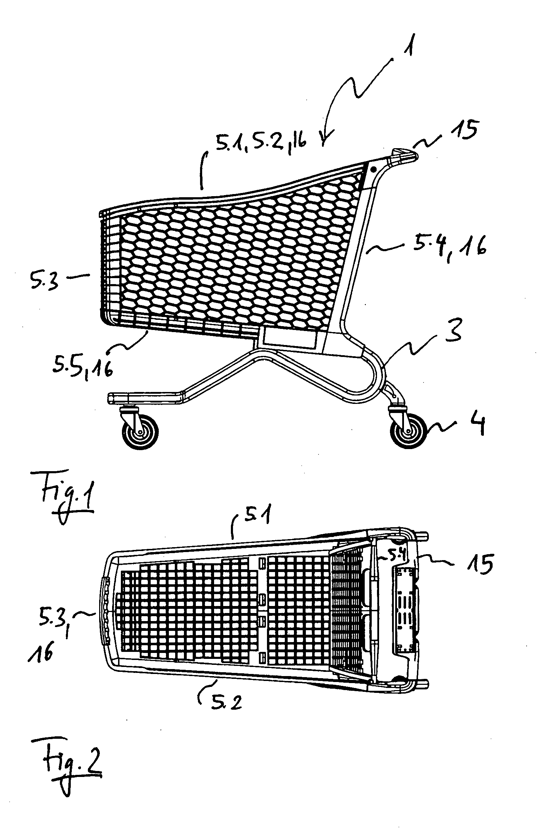

Die Figuren 1 und 2 zeigen einen stapelbaren Einkaufswagen 1 mit einem Fahrgestell 3 und mit Rollen 4. Jedes Fahrgestell 3 trägt einen Korb 5. Der Korb 5 weist verschiedene Teile auf: es sind Korbseitenwände 5.1, 5.2, eine vordere Korbwand 5.3, ein Korbboden 5.5, sowie eine Klappe 5.4 vorgesehen, die vorzugsweise mit einem nicht näher dargestellten Kindersitz 5.6 ausgestattet ist. Weiterhin ist eine Schiebeeinrichtung 15 am Korb 5 angeordnet. Im Inneren des Korbes 5 kann eine nicht näher dargestellte Trennwand 5.7 vorgesehen sein.

Die verschiedenen Teile 5.1 bis 5.7 des Korbes 5 sind überwiegend aus Kunststoff gefertigt.

Weiterhin ist der Einkaufswagen 1 mit einem Antennensystem 2a ausgestattet. Das Antennensystem 2a besteht aus einer oder mehreren Antennen 2, die von den verschiedenen Teilen 5.1 bis 5.6 des Korbes 5 vollständig und oder teilweise umschlossen sind. Ist eine Trennwand 5.7 vorhanden, kann auch diese für die Anordnung von Antennen 2 verwendet werden.

Es hat sich als vorteilhaft erwiesen, innerhalb des Antennensystems 2a die Antennen 2 in Sendeantennen 2.1 und Empfangsantennen 2.2 zu unterteilen. Somit ist jede Antenne 2 des Antennensystems 2a entweder als Sendeantenne 2.1 oder als Empfangsantenne 2.2 gebildet. Die Anzahl von Sendeantennen 2.1 kann gleich der Anzahl der Empfangsantennen 2.2 sein. Es ist aber auch eine unterschiedliche Anzahl von Sende- und Empfangsantennen 2.1, 2.2 denkbar. Sendeantennen 2.1 und Empfangsantennen 2.2 sind vorzugsweise voneinander getrennt verlegt. Der Einsatz von mehreren Sendeund Empfangsantennen 2.1, 2.2 erzielte bisher die besten Ergebnisse. Hierbei empfiehlt es sich, die Antennen 2.1, 2.2 mit einem Abstand voneinander in die Teile 5.1 bis 5.7 des Korbes 5 ganz oder teilweise zu integrieren.

Die Wagen 1, die mit einem Antennensystem 2a ausgestattet werden sollen, sind Kunststoffeinkaufswagen. Zur Einsparung von Material werden diese meist nicht vollflächig gebildet. Die Gestalt und Größe der Struktur 16 ist durch die entsprechende Spritzgussform vorgesehen. Auch können die einzelnen Teile 5.1 bis 5.7 verschiedene Strukturen 16 aufweisen.

Die dadurch gebildete Struktur kann für die Verlegung bzw. Integration der Antennen 2 verwendet werden.

Bei der Anordnung der Antennen 2 sind verschiedene Möglichkeiten gegeben. In den verschiedenen Teilen 5.1 bis 5.6 bzw. der Trennwand 5.7 kann insgesamt eine Sendeantenne 2.1 und/oder eine Empfangsantenne 2.2 verlegt werden. Es ist aber auch ein Einsatz von einer Sendeantenne 2.1 und mehreren Empfangsantennen 2.2 oder aber von einer Empfangsantenne 2.2 und mehreren Sendeantennen 2.1 denkbar. Als vorteilhaft hat sich die Anordnung von mehreren Sendeantennen 2.1 und mehreren Empfangsantennen 2.2 erwiesen.

Welche Antennen 2 und in welcher Anzahl in den verschiedenen Teilen 5.1 bis 5.6 des Korbes 5 bzw. in der Trennwand 5.7 angeordnet werden, bleibt letztendlich dem Fachmann überlassen.

Die jeweiligen Antennen 2.1 bzw. 2.2 sind vorzugsweise in einzelnen Kreisen verlegt und bei Bedarf mit Kupplungen 11 ausgestattet. Als Kupplung 11, als Bestandteil des Antennensystems 2a, werden geeignete kapazitive und/oder induktive Bauteile eingesetzt, die die Antennen 2 abgleichen bzw. an die Impedanz einer Steuerung 7 anpassen. Die Steuerung 7 ist ein Bestandteil des Antennensystems 2a.

Jede Antenne 2 ist vorzugsweise in Form eines Antennen-Kreises angeordnet. Ein Antennen-Kreis kann hierbei direkt an einen anderen Antennen-Kreis angeschlossen sein. Auch kann es vorkommen, dass Antennen 2 übereinander verlaufen. Der Winkel hierbei ist beliebig, der Abstand zwischen den beiden Antennen 2 ist derart zu wählen, dass keine Störungen auftreten. Auch können die Antennen 2.1 und 2.2 parallel zueinander oder in einem sich verändernden Abstand angeordnet werden.

Vorzugsweise wird als Antenne 2 eine Kupfer- oder Aluminiumleitung verwendet. Jede Antenne 2 kann einteilig gebildet sein oder aus Stanzteilen bestehen, die leichter zu verarbeiten sind.

Vorzugsweise ist der Durchmesser der Sendeantenne 2.1 größer als der Durchmesser der Empfangsantenne 2.2. Werte von 0,5 mm² für die Sendeantenne 2.1 und 0,25 mm² für die Empfangsantenne 2.2 haben sich als vorteilhaft erwiesen. Für beide Arten von Antennen 2 bietet sich eine KupferLeitung an. Auch Aluminium oder andere leitfähige Materialien können als Antenne 2 Verwendung finden.

Für ein besseres Auslesen des RFID-Tags kann die Sequenz der einzelnen Antennen 2 umgeschaltet werden. Die Sequenz ändert sich, wenn sich der Wagen 1 bewegt, z.B. in Kombination mit einem Rad-Sensor, und/oder wenn eine Warenbewegung erkannt wird. Solange der Wagen 1 nicht bewegt wird, befindet sich das Antennensystem 2a im "sleep-Modus". Dadurch kann die Sendeleistung der Sendeantennen 2.1 bei Nichtverwendung reduziert und letztendlich der notwendige Energieeinsatz verringert werden. Somit ist eine geringere Strahlungsleistung vorhanden. Wenn notwendig wird die Leistung des Sendesignals der Sendeantennen 2.1 in einzelnen Schritten erhöht und auch die Sequenz der einzelnen Antennen 2 verändert. Um eine Kollision der einzelnen an den Waren angebrachten RFID-Tags im Inneren des Wagens 1 zu verhindern, bietet es sich, an, dass die einzelnen Sendeantennen 2.1 bis auf eine abgeschaltet werden. Es befindet sich dann nur eine Sendeantenne 2.1 im Betrieb. Die Sendeleistung 2.1 dieser im Betrieb befindlichen Sendeantenne 2.1 wird dann in einzelnen Schritten erhöht.

Die Steuerung 7, als Bestandteil des Antennensystem 2a ist vorzugsweise in der Schiebeeinrichtung 15 angeordnet. Aber auch andere Bereiche am Wagen 1, wie beispielsweise am Fahrgestell 3, sind denkbar. Als Verbindung zwischen der bzw. den Antennen 2 und der Steuerung 7 hat sich der Einsatz einer Zuleitung 12 als vorteilhaft erwiesen. Diese Leitung 12, als weiteres Bestandteil des Antennensystems 2a, ist in Form eines Koaxialkabels.

Zwischen dem Koaxialkabel und jeder Antenne 2, unabhängig ob als Sende- oder Empfangsantenne 2.1, 2.2 ausgeführt, ist eine Kupplung 11 vorgesehen. Diese Kupplung 11 ist notwendig, um jede Antenne 2 abzugleichen bzw. an die Impedanz der Steuerung 7 anzupassen. Hierbei sind für die Kupplung 11 geeignete kapazitive und/oder induktive Bauteile auf einer dafür vorgesehenen Platine einzusetzen. Die kapazitiven und oder induktiven Bauteile können eine Drossel oder ein Kondensator 8 sein.

In einer weiterführenden Variante sind sämtliche Antennen 2 an eine dann mehrpolige Kupplung 11 angeschlossen.

Auch würde es sich anbieten, für alle Sendeantennen 2.1 und alle Empfangsantennen 2.2 jeweils eine Kupplung 11 vorzusehen.

Vorzugsweise wird bereits im Fertigungsverfahren der verschiedenen Teile 5.1 bis 5.7 eine Ausnehmung 6 für jede Antenne 2 vorgesehen.

Üblicherweise wird für die Herstellung von Kunststoffteilen ein Spritzgussverfahren verwendet. Hierfür wird eine Form hergestellt. Mittels dieser Form wird die Anordnung der Ausnehmung 6 der fertigen Spritzgussteile 5.1 bis 5.7 festgelegt. Der Querschnitt der Ausnehmung 6 bleibt dem Fachmann überlassen, vorzugsweise bietet sich eine halbkreisförmige oder rechteckige Form an.

Zunächst werden die Antennen 2.1, 2.2 in diese Ausnehmung 6 der einzelnen Teile 5.1 bis 5.7 gelegt. Anschließend werden sie mit Hilfe von Fixiermitteln 9 in der Ausnehmung 6 ortsfest angeordnet. Als Fixiermittel 9 bietet sich eine chemische Fixierung z.B. mittels eines Klebstoffes oder aber eine mechanische Fixierung durch zusätzliche Bauteile an. Zum Schutz der Antennen 2.1, 2.2 ist die Ausnehmung 6 vorzugsweise mittels einer deckelnden Vorrichtung 10 verschließbar.

Erfindungsgemäß werden die Antennen 2.1, 2.2 bereits im Fertigungsprozess von den verschiedenen Teilen 5.1 bis 5.7 des Korbes 5 vollständig und/oder teilweise umschlossen. Hierfür werden die Antennen 2.1, 2.2 direkt in die Form eingelegt, an den entsprechenden Stellen der Form fixiert und während des Spritzgussverfahrens umspritzt. Das hat den Vorteil, dass sowohl auf die Ausnehmungen 6 in der Form als auch auf Fixiermittel 9 und/oder deckelnde Vorrichtungen 10 verzichtet werden kann.

Ist das Fahrgestell 3 aus einem anderen Material als Kunststoff, sind die Antennen 2, um Störungen zu vermeiden, u.U. mit entsprechendem Abstand zu dem Gestell 3 anzuordnen. Insbesondere ist darauf zu achten, wenn das Gestell 3, zur Aufnahme des Korbes 5, bis zur Schiebeeinrichtung 15 ausgeführt ist.

Von der Steuerung 7 werden die durch die Empfangsantenne 2.2 empfangenen Daten jeder einzelnen Ware über die Sendeantennen 2.1 an eine weitere Verarbeitungseinheit 13 weitergegeben. An einer Anzeigevorrichtung 14 wie einem Display, einem Monitor etc. werden die Daten dargestellt. Die Verarbeitungseinheit 13 bietet die Möglichkeit, die Daten nach den verschiedensten Kriterien auszuwerten.

Die Daten jeder Sendeantenne 2.1 werden mittels WLAN, Bluetooth, etc. an die Verarbeitungseinheit 13 geleitet.

Die Verarbeitungseinheit 13 und die Anzeigevorrichtung 14 können direkt am Einkaufswagen 1, im Kassenbereich des Supermarktes oder an einem anderen Ort angeordnet sein.

Ist die Verarbeitungseinheit 13 am Wagen 1 vorgesehen, bietet sich eine Anordnung in der Schiebeeinrichtung 15 an.

In oder an der Schiebeeinrichtung 15 ist weiterhin das Display 14 vorgesehen, das Daten über die im Wagen 1 befindlichen Waren anzeigt.

Für jeden einzelnen Wagen 1 ist eine Stromversorgung sicherzustellen. Diese ist vorzugsweise durch einen Akku gewährleistet, der am Wagen 1 ortsfest angeordnet ist. Eine Energiezufuhr ist beispielsweise mittels einer Aufladestation, die an den einzelnen Parkboxen der Wagen 1 vorgesehen sein kann, möglich.

Alternativ kann beispielsweise mittels eines Nabendynamos an wenigstens einer der Rollen 4 des Einkaufswagens 1 der Energiebedarf des Einkaufwagens 1 gedeckt werden.

Zahlreiche andere Möglichkeiten zur Versorgung des Wagens 1 mit Energie sind denkbar und bleiben dem Fachmann überlassen.

### Bezugszeichenliste

- 1: Einkaufswagen
- 2: Antenne
- 2.1: Sendeantenne
- 2.2: Empfangsantenne
- 2a: Antennensystem
- 3: Fahrgestell
- 4: Rolle
- 5: Korb
- 5.1: Korbwand, Seite
- 5.2: Korbwand, Seite
- 5.3: Korbwand, Vorne
- 5.4: Klappe
- 5.5: Korbboden
- 5.6: Kindersitz
- 5.7: Trennwand
- 6: Ausnehmung
- 7: Steuerung
- 8: Drossel, Kondensator
- 9: Fixiermittel
- 10: deckelnde Vorrichtung
- 11: Kupplung
- 12: Zuleitung
- 13: Verarbeitungseinheit
- 14: Anzeigevorrichtung, Display
- 15: Schiebeeinrichtung
- 16: Struktur

## Patentansprüche

1. Verfahren zur Herstellung eines stapelbaren Einkaufwagens (1) mit einem Fahrgestell (3) mit Rollen (4) sowie einer Schiebeeinrichtung (15) und einem Korb (5), wobei der Korb (5) aus verschiedenen Teilen gebildet ist, wie den Korbwänden (5.1, 5.2, 5.3) und einem Korbboden (5.5), einer Klappe (5.4), wobei die Teile (5.1 bis 5.5) des Korbes (5) überwiegend aus Kunststoff gefertigt sind und wobei der Einkaufswagen (1) mit einer Antenne (2) ausgestattet ist, **dadurch gekennzeichnet, dass** jede Antenne (2) während des Spritzgussverfahrens der Teile (5.1 bis 5.5) des Korbes (5) vollständig und/oder teilweise umschlossen wird.

## Claims

1. A method of manufacturing a nestable shopping trolley (1) having a wheel frame (3) with castors (4) as well as a pushing arrangement (15) and a basket (5), wherein the basket (5) is formed from different parts, such as the basket walls (5,1, 5.2, 5.3) and a basket base (5.5), a flap (5.4), wherein the parts (5.1 to 5.5) of the basket (5) are predominantly manufactured from plastics material and wherein the shopping trolley (1) is provided with at antenna (2), **characterised in that** each antenna (2) is completely and/or partially enclosed during the injection moulding of the parts (5. to 5,5) of the basket (5).

## Revendications

1. Procédé de fabrication d'un chariot de supermarché emboîtable (1) comprenant un châssis (3) muni de roulettes (4) ainsi qu'un dispositif de poussée (15) et un panier (5), sachant que le panier (5) est formé de différentes parties telles que des parois de panier (5.1, 5.2, 5.3), un fond de panier (5.5) et un rabat (5.4), sachant que les parties (5.1 à 5.5) du panier (5) sont fabriquées principalement en matière plastique et sachant que le chariot de supermarché (1) est équipé d'une antenne (2), **caractérisé en ce que** chaque antenne (2) est totalement et/ou partiellement enrobée pendant le processus de moulage par injection des parties (5.1 à 5.5) du panier (5).
